# EUROPEAN PATENT SPECIFICATION

(11) **EP 4 292 746 B1**
(45) Date of publication and mention of the grant of the patent: **05.11.2025**
(21) Application number: 22820503.5
(22) Date of filing: 03.06.2022
(51) Int. Cl.: B23K 11/06, H01M 50/528, H01M 10/04, B23K 11/00, B23K 11/30, B23K 11/36, H01M 10/0587, H01M 50/531, H01M 50/536, B23K 101/36, B23K 101/38

(54) **WELDING DEVICE FOR CYLINDRICAL BATTERY CELL**
SCHWEISSVORRICHTUNG FÜR ZYLINDRISCHE BATTERIEZELLE
APPAREIL DE SOUDAGE POUR ÉLÉMENT DE BATTERIE CYLINDRIQUE

(30) Priority: 10.06.2021 KR 20210075731; 25.05.2022 KR 20220063978
(43) Date of publication of application: 20.12.2023
(73) Proprietor: LG Energy Solution Ltd., Seoul 07335 (KR)
(72) Inventor: WOO, Jae-Young, Daejeon 34122 (KR); RYU, Duk-Hyun, Daejeon 34122 (KR)
(74) Representative: Goddar, Heinz J.
(86) International application number: PCT/KR2022/007951
(87) International publication number: WO 2022/260375

(56) References cited:
- KR-A- 20120 138 076
- KR-A- 20180 058 376
- KR-A- 20180 061 072
- KR-A- 20200 062 896
- KR-A- 20200 062 896
- KR-U- 20140 000 263
- US-A1- 2020 094 347
- US-A1- 2020 180 063

## Description

### TECHNICAL FIELD

The present application claims priority to Korean Patent Application No. 10-2021-0075731 filed on June 10, 2021 and Korean Patent Application No. 10-2022-0063978 filed on May 25, 2022 in the Republic of Korea.

The present invention relates to a welding device for a cylindrical battery cell according to the preamble of claim 1 (see for example KR 2020 0062896 A).

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source. These secondary batteries are attracting attention as a new energy source for improving eco-friendliness and energy efficiency because they not only have the primary advantage of dramatically reducing the use of fossil fuels, but also do not generate any by-products from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell, that is, a unit battery cell, has an operating voltage of about 2.5 V to 4.5 V. Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number of battery cells included in the battery pack may be variously set according to a required output voltage and/or charge/discharge capacity.

On the other hand, the cylindrical battery cell is manufactured in such a way that a jelly-roll type electrode assembly is accommodated in a battery can together with an electrolyte. At this time, a negative electrode tab protruding downward from the jelly-roll type electrode assembly is coupled to an electric connection component such as a current collecting plate or a lead tab by welding, and then is accommodated in the battery can. Then, the bottom surface of the battery can and the electric connection component are joined by welding.

On the other hand, as such a welding method, a resistance welding method is mainly employed, and during this welding process, damage to the electrode assembly or the separator may occur. For example, damage to the electrode assembly or the separator may occur due to friction between the welding rod and the electrode assembly while the welding rod is inserted into a winding center hole provided at the winding center of the jelly-roll type electrode assembly. In addition, since the temperature of the welding rod is very elevated after welding, the risk of damage to the electrode assembly or the separator is higher when the high-temperature welding rod is taken out.

Therefore, it is required to find a way to minimize damage to the jelly-roll type electrode assembly or the separator when welding the electric connection component and the bottom surface of the battery can.

### Present invention

### Technical Problem

The present invention is designed to solve the problems of the related art, and therefore the present invention is directed to minimizing damage to an electrode assembly and/or a separator, when performing welding for bonding a bottom surface of a battery can and an electric connection component connected to an electrode tab of the electrode assembly such as a current collecting plate or a lead tab.

In particular, the present invention is directed to providing a welding device capable of expanding a winding center hole of an electrode assembly, thereby preventing a direct contact between a high-temperature welding portion and an electrode assembly, thereby preventing friction between the high-temperature welding part portion and the electrode assembly, resulting in minimizing the occurrence of defects in the electrode assembly.

However, the technical object to be solved by the present invention is not limited to the above, and other objects not mentioned herein will be clearly understood by those skilled in the art from the following disclosure.

### Technical Solution

In one aspect of the present invention, there is provided a welding device, which includes a welding rod configured to be inserted into a winding center hole provided at a winding center of an electrode assembly inserted into a battery can to weld an electrode tab of the electrode assembly or an electric connection component coupled with the electrode tab to a bottom surface of the battery can as defined in claim 1, wherein the welding rod includes: a center rod located at a center of the welding rod in a diameter direction; and an exterior cover configured to cover an outer circumference of the center rod and installed to be movable in a first direction away from the center rod and in a second direction closer to the center rod.

According to the present invention, in use, as the exterior cover moves in the first direction, the exterior cover may be configured to press an inner wall of the winding center hole to increase a diameter of the winding center hole.

The center rod may have a shape in which a diameter thereof is longer than a length thereof.

The first direction and the second direction may be directions parallel to a radial direction of the center rod.

The exterior cover may include a plurality of unit covers configured to cover a part of the outer circumference of the center rod and arranged along a perimeter of the outer circumference.

The plurality of unit covers may be configured to increase an outer diameter of the welding rod by moving along the first direction.

The plurality of unit covers may be configured such that a distance between adjacent unit covers increases according to the movement in the first direction and the distance between adjacent unit covers decreases according to the movement in the second direction.

The plurality of unit covers may be configured such that adjacent unit covers partially overlap each other according to an operating state.

A length of the welding rod in a longitudinal direction may be greater than or equal to a length of the electrode assembly in a height direction.

A minimum outer diameter of the welding rod according to an operating state of the exterior cover may be equal to or smaller than a diameter of the winding center hole of the electrode assembly.

Thermal conductivity of the exterior cover may be lower than thermal conductivity of the center rod.

One of both longitudinal ends of the center rod, which is inserted toward the bottom surface of the battery can, may be exposed to the outside of the exterior cover.

At least one of the center rod and the exterior cover may be configured to be movable along an extension direction of the center rod such that one of both longitudinal ends of the center rod, which is inserted toward the bottom surface of the battery can, is exposed to the outside of the exterior cover or covered by the exterior cover.

The welding device may further comprise a support body configured to support the welding rod.

The support body may have an insert hole into which the welding rod is inserted, and the plurality of unit covers may be configured to move along the first direction and the second direction within a space formed between an inner wall of the insert hole and the center rod.

The support body may include at least one control unit configured to control movement of the welding rod.

Each of the plurality of unit covers may be configured to be mechanically connected to the control unit to move in the first direction and the second direction according to motion of the control unit.

Each of the plurality of unit covers may be configured to move in the first direction and the second direction by an actuator electronically controlled by the control unit.

The welding device may further comprise a support body configured to support the welding rod.

The support body may have an insert hole into which the welding rod is inserted, and at least one of the center rod and the exterior cover may be configured to be movable along the extension direction of the center rod inside the insert hole.

The support body may include at least one control unit configured to control movement of at least one of the center rod and the exterior cover.

At least one of the center rod and the exterior cover may be configured to be mechanically connected to the control unit to move in a direction parallel to an extension direction of the center rod according to motion of the control unit.

At least one of the center rod and the exterior cover may be configured to move in a direction parallel to an extension direction of the center rod by an actuator electronically controlled by the control unit.

### Advantageous Effects

According to the present invention, in performing welding for bonding between an electric connection component such as a current collecting plate or a lead tab and the bottom surface of a battery can, damage to a jelly-roll type electrode assembly or a separator may be minimized.

In particular, according to the welding device of the present invention, it is possible to expand the winding center hole of the jelly-roll type electrode assembly. Therefore, direct contact between the high-temperature welding portion and the electrode assembly may be prevented. In addition, by preventing friction between the high-temperature welding portion and the electrode assembly, it is possible to minimize the occurrence of defects in the electrode assembly.

In addition, the present invention may have various other effects, which will be described in each embodiment, or a corresponding description will be omitted for effects that can be easily inferred by a person skilled in the art.

### DESCRIPTION OF DRAWINGS

The accompanying drawings illustrate a preferred embodiment of the present invention and together with the foregoing disclosure, serve to provide further understanding of the technical features of the present disclosure, and thus, the present disclosure is not construed as being limited to the drawing.
FIG. 1 is a diagram for explaining a welding device according to an embodiment of the present disclosure.
FIG. 2 is a diagram for explaining a welding rod of the welding device of FIG. 1.
FIG. 3 is a diagram for explaining an exterior cover according to another embodiment of the present disclosure.
FIG. 4 is a diagram for explaining an exterior cover of the welding rod of FIG. 2.
FIG. 5 is a diagram for explaining an exterior cover according to another embodiment of the present disclosure.
FIG. 6 is a diagram of FIG. 2, viewed in an A direction.
FIG. 7 is a diagram for explaining a support body of the welding device of FIG. 1.

### BEST MODE

Hereinafter, preferred embodiments of the present invention will be described in detail with reference to the accompanying drawings.

The present description is just a preferable example for the purpose of illustrations only, not intended to limit the scope of the present invention, so it should be understood that other equivalents and modifications could be made thereto without departing from the scope of the present invention as defined in the appended claims.

In addition, in order to help understanding of the present invention, the accompanying drawings are not drawn to scale, but dimensions of some components may be exaggerated.

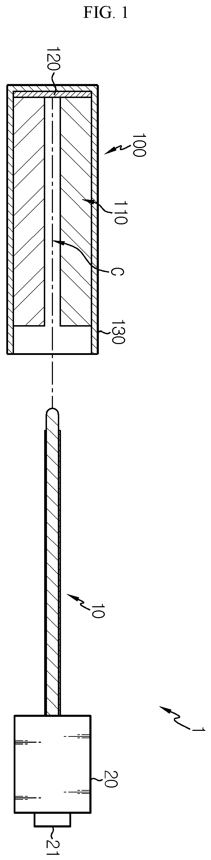

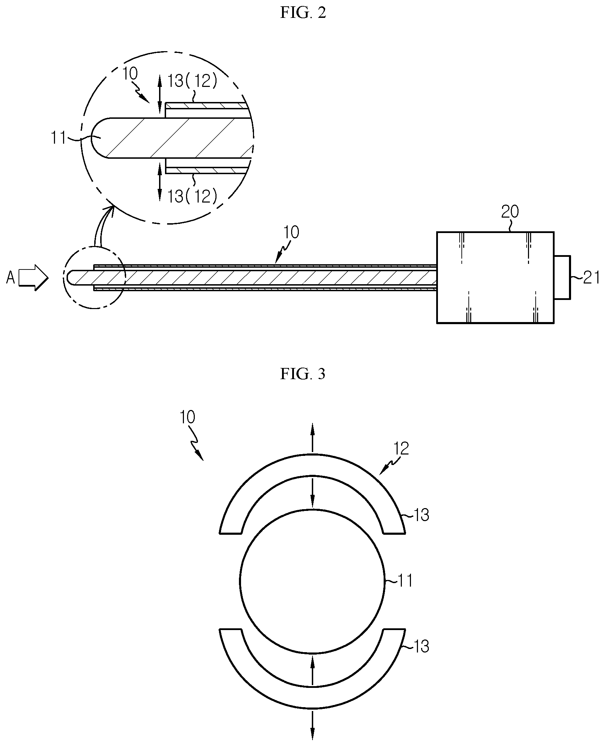

FIG. 1 is a diagram for explaining a welding device according to an embodiment of the present disclosure, and FIG. 2 is a diagram for explaining a welding rod of the welding device of FIG. 1.

Referring to FIGS. 1 and 2, a welding device 1 according to an embodiment of the present disclosure includes a welding rod 10. The welding device 1 may further include a support body 20.

The welding device 1 is configured to be inserted into a winding center hole C provided at a winding center of an electrode assembly 110 inserted into a battery can 130 of a cylindrical battery cell 100 to weld an electrode tab (not shown) provided in the electrode assembly 110 or an electric connection component 120 coupled with the electrode tab to a bottom surface of the battery can 130.

The electrode assembly 110 may be, for example, a jelly-roll type electrode assembly. The electric connection component 120 means, for example, a component for electrically connecting the electrode assembly 110 and the battery can 130, like an electrode current collecting plate or a lead tab coupled to an electrode tab (not shown) protruding downward from the electrode assembly 110. In the drawings of the present disclosure, the electric connection component 120 is illustrated as an electrode current collecting plate as an example. Meanwhile, the welding method may be, for example, a resistance welding method.

Referring to FIGS. 1 and 2, the welding rod 10 includes a center rod 11 positioned at the center of the welding rod 10 in the diameter direction and an exterior cover 12 that covers the outer circumference of the center rod 11.

A length of the welding rod 10 in the longitudinal direction may be greater than or equal to a length of the electrode assembly 110 in the height direction. For example, referring to FIG. 1, the length of the welding rod 10 in the longitudinal direction is greater than the length of the electrode assembly 110 in the height direction, which is accommodated in the battery can 130. Accordingly, an end of the welding rod 10 may contact the electric connection component 120 coupled to the electrode tab (not shown) of the electrode assembly 110. Accordingly, the electric connection component 120 and the bottom surface of the battery can 130 may be easily welded.

Referring to FIGS. 1 and 2, the center rod 11 is located approximately at the center of the welding rod 10 in the diameter direction. The center rod 11 may have a shape in which its diameter is longer than its length. That is, the center rod 11 may have an approximately cylindrical shape that is thin and long. For example, referring to FIG. 1, the center rod 11 may have an approximately needle shape with a relatively small diameter compared to its length.

As a direction parallel to the radial direction of the center rod 11, a first direction and a second direction may be defined. For example, referring to FIG. 2, the center rod 11 may be assumed to be an approximately cylinder whose central axis is parallel to the length direction of the center rod 11. At this time, in the radial directions of the cylinder, a +r direction may be defined as the first direction, and a -r direction may be defined as the second direction. That is, the first direction may be a direction away from the central axis of the center rod 11, and the second direction may be a direction closer to the central axis of the center rod 11.

Referring to FIG. 2, one of both longitudinal ends of the center rod 11, which is inserted toward the inner bottom surface of the battery can 130, may be exposed to the outside of the exterior cover 12. If the end of the center rod 11 is not exposed to the outside of the exterior cover 12, it may not be easy for the center rod 11 to contact the electric connection component 120. Therefore, the end of the center rod 11 may be exposed to the outside of the exterior cover 12 for easy welding. However, the end of the center rod 11 is not limited to always being exposed to the outside of the exterior cover 12. That is, at least one of the center rod 11 and the exterior cover 12 may be configured to be movable along the extension direction of the center rod 11 such that one of both longitudinal ends of the center rod 11, which is inserted toward the inner bottom surface of the battery can 130, is exposed to the outside of the exterior cover 12 or covered by the exterior cover 12.

For example, before welding, the end of the welding rod 10 may be retracted to the inside of the exterior cover 12, and only when welding is performed, the end of the welding rod 10 may be exposed to the outside of the exterior cover 12. Also, on the contrary, it is also possible that the position of the welding rod 10 is fixed and the exterior cover 12 moves along the length direction of the welding rod 10 so that the end of the welding rod 10 is exposed to the outside of the exterior cover 12 or covered by the exterior cover 12. In addition, it is also possible that the end of the welding rod 10 is exposed to the outside of the exterior cover 12 or completely covered by the exterior cover 12 by moving both the welding rod 10 and the exterior cover 12.

Referring to FIGS. 1 and 2, the exterior cover 12 covers the outer circumference of the center rod 11 and is installed to be movable in the first direction away from the center rod 11 and in the second direction closer to the center rod 11. As moving in the first direction, the exterior cover 12 is configured to press an inner wall of the winding center hole C to increase the diameter of the winding center hole C. Accordingly, a predetermined gap is secured between the electrode assembly 110 and the center rod 11. In consideration of this function, the minimum outer diameter of the welding rod 10 according to the operating state of the exterior cover 12 may be formed to be equal to or smaller than the diameter of the winding center hole C of the electrode assembly 110.

The thermal conductivity of the exterior cover 12 may be equal to or lower than the thermal conductivity of the center rod 11. For example, the material of the exterior cover 12 may be the same as the material of the center rod 11. Since the center rod 11 performs resistance welding, it is generally made of metal. At this time, the material of the exterior cover 12 may also be metal. In this case, the rigidity of exterior cover 12 may be secured to a certain level. Therefore, the exterior cover 12 may easily increase the diameter of the winding center hole C.

On the other hand, the thermal conductivity of the exterior cover 12 may be lower than the thermal conductivity of the center rod 11. According to the configuration of the present disclosure, it is possible to minimize the transfer of heat from the center rod 11 heated to a high temperature for welding to the electrode assembly 110, thereby preventing damage to the electrode assembly 110. In particular, a separator may be disposed on the inner wall of the winding center hole C of the electrode assembly 110, and in this case, damage to the separator may be prevented by lowering the thermal conductivity of the exterior cover 12. For example, the material of the exterior cover 12 may be a high-strength plastic material with excellent rigidity and low thermal conductivity. In this case, the high-strength plastic may contain, for example, glass fibers in order to withstand a significant increase in the temperature of the center rod 11. As a material of the exterior cover 12, in addition, for example, a ceramic material may be applied. When a material having lower thermal conductivity than the center rod 11 is applied as the material of the exterior cover 12, the heat of the high temperature center rod 11 is not well conducted to the exterior cover 12. Accordingly, the exterior cover 12 may serve as a thermal shield between the center rod 11 and the electrode assembly 110, thereby preventing thermal damage to the electrode assembly 110.

However, the material of the exterior cover 12 is not limited thereto, and various materials having high rigidity even in a thin thickness may be applied to the exterior cover 12.

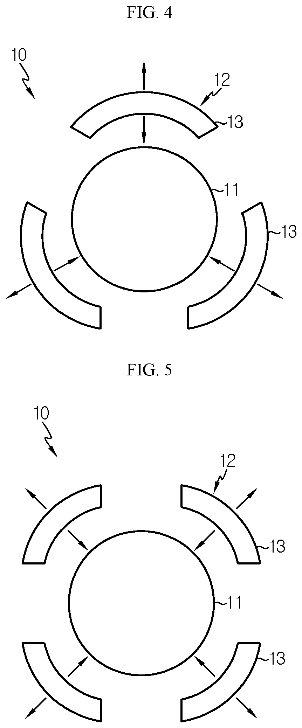

FIG. 4 is a diagram for explaining an exterior cover of the welding rod of FIG. 2, and FIGS. 3 and 5 are diagrams for explaining exterior covers according to other embodiment of the present disclosure.

Referring to FIGS. 3 to 5, the exterior cover 12 may include a plurality of unit covers 13 that cover a part of the outer circumference of the center rod 11 and are arranged along a perimeter of the outer circumference. In this case, the plurality of unit covers 13 may be configured to increase the outer diameter of the welding rod 10 by moving along the first direction.

For example, the exterior cover 12 includes two unit covers 13 in FIG. 3, the exterior cover 12 includes three unit covers 13 in FIG. 4, and the exterior cover 12 includes four unit covers 13 in FIG. 5. As the exterior cover 12 includes a greater number of unit covers 13, the shape of the expanding winding center hole C may be closer to a circular shape. For example, in FIG. 3, since exterior cover 12 includes two unit cover 13, the unit cover 13 has a structure that opens to both sides. Therefore, at this time, the shape of the winding center hole C becomes an approximately elliptical shape. On the other hand, in FIG. 5, since the exterior cover 12 includes four unit covers 13, the unit covers 13 have a structure that opens in 4 directions at intervals of 90 degrees. Therefore, the shape of the winding center hole C at this time becomes approximately circular.

Referring to FIGS. 3 to 5, when the exterior cover 12 extends along the first direction, the distance between the plurality of unit covers 13 may be changed. For example, the plurality of unit covers 13 may be configured such that a distance between adjacent unit covers 13 increases according to the movement in the first direction, and a distance between adjacent unit covers 13 decreases according to the movement in the second direction. The plurality of unit covers 13 may be configured to surround the center rod 11 without being spaced apart from each other so that the center rod 11 is not exposed to the outside of the exterior cover 12, before the exterior cover 12 is expanded. However, when the unit covers 13 move in the first direction for the expansion of the exterior cover 12, the distance between the unit covers 13 may increase. Meanwhile, although not specifically illustrated in the drawings, the plurality of unit covers 13 may be configured such that adjacent unit covers 13 partially overlap each other according to an operating state. In this case, the overlapping area of the unit covers 13 adjacent to each other may be formed to be widest in a state before the exterior cover 12 is expanded. Conversely, in a state where the exterior cover 12 is expanded to the maximum, the overlapping area of adjacent unit covers 13 may be minimized, or the adjacent unit covers 13 may be spaced apart from each other not to generate an overlapping area.

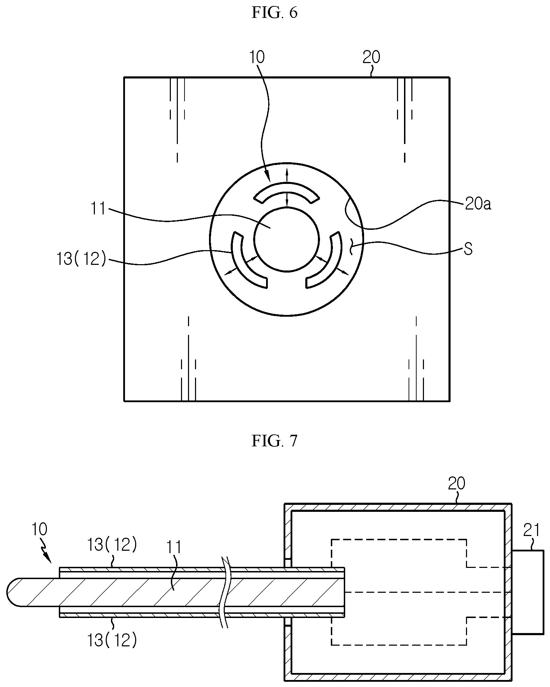

FIG. 6 is a diagram of FIG. 2, viewed in an A direction, and FIG. 7 is a diagram for explaining a support body 20 of the welding device 1 of FIG. 1.

Referring to FIGS. 6 and 7, the support body 20 may be configured to support the welding rod 10. For example, the support body 20 may be coupled to the welding rod 10 at one longitudinal side of the welding rod 10. The support body 20 may include an insert hole 20a.

The plurality of unit covers 13 may move along the first direction or the second direction within a space formed between the inner wall of the insert hole 20a and the center rod 11. For example, referring to FIGS. 6 and 7, the support body 20 may have an insert hole 20a in which the welding rod 10 and the exterior cover 12 may be accommodated, and at this time, a space S may be formed between the center rod 11 and the inner wall of the insert hole 20a.

Referring to FIG. 7, the support body 20 may include at least one control unit 21. The control unit 21 may be configured to control movement of the welding rod 10. For example, the control unit 21 may be a mechanical control unit or an electronic control unit.

Specifically, for example, each of the plurality of unit covers 13 may be configured to be mechanically connected to the control unit 21 to move in the first direction and the second direction according to motion of the control unit 21. More specifically, for example, an arm to which a plurality of hinges are coupled may be connected to each of the plurality of unit covers 13, and the control unit 21 may be a button or dial connected to the plurality of arms and configured to control movement of the plurality of arms. However, in the present disclosure, the mechanical connection structure for controlling the movement of the plurality of unit covers 13 through the control unit 21 is not limited thereto, and any mechanical connection structure capable of increasing and decreasing the outer diameter of the welding rod 10 by controlling the motion of the plurality of unit covers 13 may be applicable to the present disclosure.

Alternatively, each of the plurality of unit covers 13 may have a structure that moves in the first direction or the second direction by an actuator (not shown) electronically controlled by the control unit 21. For example, a motor may be provided inside the support body 20, and the motor and the control unit 21 may be electrically connected. At this time, by operating the motor through the control unit 21, the unit cover 13 connected to the motor may move in the first direction or the second direction. Therefore, the diameter of the welding rod 10 may be increased or decreased.

Meanwhile, the control unit 21 may move the center rod 11 and/or the exterior cover 12 along a direction parallel to the central axis of the welding rod 10. That is, the support body 20 may include at least one control unit configured to control the operation of at least one of the center rod 11 and the exterior cover 12. At least one of the center rod 11 and the exterior cover 12 may be mechanically connected to the control unit 21 and configured to operate in a direction parallel to the extension direction of the center rod 11 according to the motion of the control unit 21. Alternatively, at least one of the center rod 11 and the exterior cover 12 may be configured to operate in a direction parallel to the extension direction of the center rod 11 by an actuator (not shown) electronically controlled by the control unit 21.

For example, when the welding rod 10 is inserted into the winding center hole C of the electrode assembly 110 or withdrawn from the winding center hole C, the control unit 21 may be manipulated to move the center rod 11 toward the support body 20 or to move the exterior cover 12 away from the support body 20 so that the longitudinal end of the support body 20 is not exposed to the outside of the exterior cover 12, thereby preventing contact between the center rod 11 and the electrode assembly 110. Of course, it is also possible to move the center rod 11 toward the support body 20 and to move the exterior cover 12 away from the support body 20 by manipulating the control unit 21.

In addition, when performing welding, the control unit 21 may be manipulated to move the center rod 11 away from the support body 20 or to move the exterior cover 12 toward the support body 20 so that the longitudinal end of the support body 20 is exposed to the outside of the exterior cover 12, thereby allowing the center rod 11 and the electric connection component 120 to easily contact each other. Of course, it is also possible to move the center rod 11 away from the support body 20 and to move the exterior cover 12 toward the support body 20 by manipulating the control unit 21.

In the present disclosure, the control unit 21 for controlling the movement for exposing and hiding the center rod 11 and the control unit 21 for controlling the change of the outer diameter of the welding rod 10 may be the same control unit, or may be different control units provided separately.

On the other hand, although terms indicating directions such as up and down are used in this specification, these terms are only for convenience of explanation, and it is obvious to those skilled in the art of the present disclosure that they may vary depending on the location of a target object or the location of an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Explanation of signs]

1 welding device
10 welding rod
11 center rod
12 exterior cover
13 unit cover
20 support body
20a insert hole
21 control unit
100 cylindrical battery cell
110 electrode assembly
120 electric connection component
130 battery can
C winding center hole

## Claims

1. A welding device (1), which includes a welding rod (10) configured to be inserted into a winding center hole (C) provided at a winding center of an electrode assembly (110) inserted into a battery can (130) to weld an electrode tab of the electrode assembly (110) or an electric connection component (120) coupled with the electrode tab to a bottom surface of the battery can (130),
wherein the welding rod (10) includes:
a center rod (11) located at a center of the welding rod (10) in a diameter direction; and
the welding device (1) being **characterised in that** the welding rod (10) further includes:
an exterior cover (12) comprising a constant thickness configured to cover an outer circumference of the center rod (11) and installed to be movable in a first direction away from the center rod (11) and in a second direction closer to the center rod (11),
and **in that** the welding device (1) comprises means for moving the exterior cover (12) so that, in use, as the exterior cover (12) moves in the first direction, the exterior cover (12) is configured to press an inner wall of the winding center hole (C) to increase a diameter of the winding center hole (C).

2. The welding device according to claim 1,
wherein the center rod (11) has a shape in which a length thereof is longer than a diameter thereof.

3. The welding device according to claim 1,
wherein the first direction and the second direction are directions parallel to a radial direction of the center rod (11).

4. The welding device according to claim 1,
wherein the exterior cover (12) includes a plurality of unit covers (13) configured to cover a part of the outer circumference of the center rod (11) and arranged along a perimeter of the outer circumference.

5. The welding device according to claim 4,
wherein the plurality of unit covers (13) are configured to increase an outer diameter of the welding rod (10) by moving along the first direction.

6. The welding device according to claim 5,
wherein the plurality of unit covers (13) are configured such that a distance between adjacent unit covers (13) increases according to the movement in the first direction and the distance between adjacent unit covers (13) decreases according to the movement in the second direction.

7. The welding device according to claim 5,
wherein the plurality of unit covers (13) are configured such that adjacent unit covers (13) partially overlap each other according to an operating state.

8. The welding device according to claim 1 in combination with an electrode assembly (110),
wherein a length of the welding rod (10) in a longitudinal direction is greater than or equal to a length of the electrode assembly (110) in a height direction.

9. The welding device according to claim 1 in combination with an electrode assembly (110),
wherein a minimum outer diameter of the welding rod (10) according to an operating state of the exterior cover (12) is equal to or smaller than a diameter of the winding center hole (C) of the electrode assembly (110).

10. The welding device according to claim 1,
wherein thermal conductivity of the exterior cover (12) is lower than thermal conductivity of the center rod (11).

11. The welding device according to claim 1,
wherein one of both longitudinal ends of the center rod (11), which is inserted toward the bottom surface of the battery can (130), is exposed to the outside of the exterior cover (12).

12. The welding device according to claim 1,
wherein at least one of the center rod (11) and the exterior cover (12) is configured to be movable along an extension direction of the center rod (11) such that one of both longitudinal ends of the center rod (11), which is inserted toward the bottom surface of the battery can (130), is exposed to the outside of the exterior cover (12) or covered by the exterior cover (12).

13. The welding device according to claim 4, further comprising:
a support body (20) configured to support the welding rod (10).

14. The welding device according to claim 13,
wherein the support body (20) has an insert hole (20a) into which the welding rod (10) is inserted, and
wherein the plurality of unit covers (13) are configured to move along the first direction and the second direction within a space formed between an inner wall of the insert hole (20a) and the center rod (11).

## Patentansprüche

1. Schweißvorrichtung (1), die einen Schweißstab (10) umfasst, der konfiguriert ist, um in ein Wicklungsmittelloch (C) eingeführt zu werden, das an einer Wicklungsmitte einer Elektrodenanordnung (110) bereitgestellt ist, die in eine Batteriedose (130) eingeführt ist, um eine Elektrodenlasche der Elektrodenanordnung (110) oder eine elektrische Verbindungskomponente (120), die mit der Elektrodenlasche gekoppelt ist, an eine Bodenfläche der Batteriedose (130) zu schweißen,
wobei der Schweißstab (10) Folgendes aufweist:
einen Mittelstab (11), der an einer Mitte des Schweißstabs (10) in einer Durchmesserrichtung angeordnet ist; und
wobei die Schweißvorrichtung (1) **dadurch gekennzeichnet ist, dass** der Schweißstab (10) ferner Folgendes aufweist:
eine Außenabdeckung (12), die eine konstante Dicke aufweist, die konfiguriert ist, um einen Außenumfang des Mittelstabs (11) abzudecken, und installiert ist, um in einer ersten Richtung weg von dem Mittelstab (11) und in einer zweiten Richtung näher an dem Mittelstab (11) bewegbar zu sein,
und dadurch, dass die Schweißvorrichtung (1) Mittel zum Bewegen der Außenabdeckung (12) aufweist, so dass im Gebrauch, wenn sich die Außenabdeckung (12) in der ersten Richtung bewegt, die Außenabdeckung (12) konfiguriert ist, um eine Innenwand des Wicklungsmittellochs (C) zu drücken, um einen Durchmesser des Wicklungsmittellochs (C) zu vergrößern.

2. Schweißvorrichtung nach Anspruch 1,
wobei der Mittelstab (11) eine Form aufweist, in der eine Länge davon länger als ein Durchmesser davon ist.

3. Schweißvorrichtung nach Anspruch 1,
wobei die erste Richtung und die zweite Richtung Richtungen parallel zu einer radialen Richtung des Mittelstabs (11) sind.

4. Schweißvorrichtung nach Anspruch 1,
wobei die Außenabdeckung (12) mehrere Einheitsabdeckungen (13) aufweist, die konfiguriert sind, um einen Teil des Außenumfangs des Mittelstabs (11) abzudecken, und entlang eines Umfangs des Außenumfangs angeordnet sind.

5. Schweißvorrichtung nach Anspruch 4,
wobei die mehreren Einheitsabdeckungen (13) konfiguriert sind, um einen Außendurchmesser des Schweißstabs (10) durch Bewegen entlang der ersten Richtung zu vergrößern.

6. Schweißvorrichtung nach Anspruch 5,
wobei die mehreren Einheitsabdeckungen (13) so konfiguriert sind, dass ein Abstand zwischen benachbarten Einheitsabdeckungen (13) gemäß der Bewegung in der ersten Richtung zunimmt und der Abstand zwischen benachbarten Einheitsabdeckungen (13) gemäß der Bewegung in der zweiten Richtung abnimmt.

7. Schweißvorrichtung nach Anspruch 5,
wobei die mehreren Einheitsabdeckungen (13) so konfiguriert sind, dass benachbarte Einheitsabdeckungen (13) gemäß einem Betriebszustand teilweise einander überlappen.

8. Schweißvorrichtung nach Anspruch 1 in Kombination mit einer Elektrodenanordnung (110),
wobei eine Länge des Schweißstabs (10) in einer Längsrichtung größer oder gleich einer Länge der Elektrodenanordnung (110) in einer Höhenrichtung ist.

9. Schweißvorrichtung nach Anspruch 1 in Kombination mit einer Elektrodenanordnung (110),
wobei ein minimaler Außendurchmesser des Schweißstabs (10) gemäß einem Betriebszustand der Außenabdeckung (12) gleich oder kleiner als ein Durchmesser des Wicklungsmittellochs (C) der Elektrodenanordnung (110) ist.

10. Schweißvorrichtung nach Anspruch 1,
wobei die Wärmeleitfähigkeit der Außenabdeckung (12) niedriger als die Wärmeleitfähigkeit des Mittelstabs (11) ist.

11. Schweißvorrichtung nach Anspruch 1,
wobei eines der beiden Längsenden des Mittelstabs (11), der in Richtung der Bodenfläche der Batteriedose (130) eingeführt ist, zur Außenseite der Außenabdeckung (12) freiliegt.

12. Schweißvorrichtung nach Anspruch 1,
wobei mindestens einer des Mittelstabs (11) und der Außenabdeckung (12) konfiguriert ist, um entlang einer Erstreckungsrichtung des Mittelstabs (11) beweglich zu sein, sodass eines der beiden Längsenden des Mittelstabs (11), der in Richtung der Bodenfläche der Batteriedose (130) eingeführt ist, zur Außenseite der Außenabdeckung (12) freiliegt oder von der Außenabdeckung (12) abgedeckt ist.

13. Schweißvorrichtung nach Anspruch 4, ferner aufweisend:
einen Stützkörper (20), der konfiguriert ist, um den Schweißstab (10) zu stützen.

14. Schweißvorrichtung nach Anspruch 13,
wobei der Stützkörper (20) ein Einführloch (20a) aufweist, in das der Schweißstab (10) eingeführt ist, und
wobei die mehreren Einheitsabdeckungen (13) konfiguriert sind, um sich entlang der ersten Richtung und der zweiten Richtung innerhalb eines Raums zu bewegen, der zwischen einer Innenwand des Einführlochs (20a) und dem Mittelstab (11) gebildet ist.

## Revendications

1. Dispositif de soudage (1) comprenant une baguette de soudage (10) configurée pour être insérée dans un trou central d'enroulement (C) agencé à un centre d'enroulement d'un ensemble d'électrodes (110) inséré dans un boîtier de batterie (130), afin de souder une languette d'électrode de l'ensemble d'électrodes (110) ou un composant de connexion électrique (120) couplé à la languette d'électrode sur une surface inférieure du boîtier de batterie (130),
la baguette de soudage (10) comprenant :
une tige centrale (11) située à un centre de la baguette de soudage (10) dans une direction diamétrale ; et
le dispositif de soudage (1) étant **caractérisé en ce que** la baguette de soudage (10) comprend en outre :
un couvercle extérieur (12) ayant une épaisseur constante, configuré pour couvrir une circonférence extérieure de la tige centrale (11), et installé pour pouvoir être déplacé dans une première direction dans le sens opposé à la tige centrale (11) et dans une seconde direction plus proche de la tige centrale (11),
et **en ce que** le dispositif de soudage (1) comprend un dispositif pour déplacer le couvercle extérieur (12) de sorte qu'en cours d'utilisation, lorsque le couvercle extérieur (12) se déplace dans la première direction, le couvercle extérieur (12) soit configuré pour appuyer sur une paroi intérieure du trou central d'enroulement (C) afin d'augmenter un diamètre du trou central d'enroulement (C).

2. Dispositif de soudage selon la revendication 1,
la tige centrale (11) ayant une forme dans laquelle une longueur de celle-ci est plus longue qu'un diamètre de celle-ci.

3. Dispositif de soudage selon la revendication 1,
la première direction et la deuxième direction étant des directions parallèles à une direction radiale de la tige centrale (11).

4. Dispositif de soudage selon la revendication 1,
le couvercle extérieur (12) comprenant une pluralité de couvercles d'unité (13) configurés pour couvrir une partie de la circonférence extérieure de la tige centrale (11) et disposés le long d'un périmètre de la circonférence extérieure.

5. Dispositif de soudage selon la revendication 4,
la pluralité de couvercles d'unité (13) étant configurés pour augmenter un diamètre extérieur de la baguette de soudage (10) en se déplaçant dans la première direction.

6. Dispositif de soudage selon la revendication 5,
la pluralité de couvercles d'unité (13) étant configurés de sorte qu'une distance entre des couvercles d'unité adjacente (13) augmente en fonction du déplacement dans la première direction, et que la distance entre des couvercles d'unité adjacents (13) diminue en fonction du déplacement dans la deuxième direction.

7. Dispositif de soudage selon la revendication 5,
la pluralité de couvercles d'unité (13) étant configurés de sorte que des couvercles d'unité adjacents (13) se chevauchent partiellement en fonction d'un mode de fonctionnement.

8. Dispositif de soudage selon la revendication 1 conjointement avec un ensemble d'électrodes (110),
une longueur de la baguette de soudage (10) dans une direction longitudinale étant supérieure ou égale à une longueur de l'ensemble d'électrodes (110) dans le sens de la hauteur.

9. Dispositif de soudage selon la revendication 1 conjointement avec un ensemble d'électrodes (110),
un diamètre extérieur minimum de la baguette de soudage (10) d'après un mode de fonctionnement du couvercle extérieur (12) étant égal ou inférieur à un diamètre du trou central d'enroulement (C) de l'ensemble électrodes (110).

10. Dispositif de soudage selon la revendication 1,
la conductivité thermique du couvercle extérieur (12) étant inférieure à la conductivité thermique de la tige centrale (11).

11. Dispositif de soudage selon la revendication 1,
une des deux extrémités longitudinales de la tige centrale (11), qui est insérée vers la surface inférieure du boîtier de la batterie (130), étant exposée à l'extérieur du couvercle extérieur (12).

12. Dispositif de soudage selon la revendication 1,
au moins un de la tige centrale (11) et du couvercle extérieur (12) étant configuré pour pouvoir être déplacé dans une direction d'extension de la tige centrale (11) de sorte qu'une de deux extrémités longitudinales de la tige centrale (11), insérée vers la surface inférieure du boîtier de la batterie (130), soit exposée à l'extérieur du couvercle extérieur (12) ou recouverte par le couvercle extérieur (12).

13. Dispositif de soudage selon la revendication 4, comprenant en outre
un corps de support (20) configuré pour supporter la baguette de soudage (10).

14. Dispositif de soudage selon la revendication 13,
le corps de support (20) possédant un trou d'insertion (20a) dans lequel la baguette de soudage (10) est insérée, et
la pluralité de couvercles d'unité (13) étant configurés pour se déplacer dans la première direction et la deuxième direction au sein d'un espace formé entre une paroi intérieure du trou d'insertion (20a) et la tige centrale (11).
